Europäisches Patentamt

European Patent Office

Office européen des brevets

(19)

(11) Veröffentlichungsnummer : **0 446 167 A1**

(12) # EUROPÄISCHE PATENTANMELDUNG

(21) Anmeldenummer : **91810114.8**

(51) Int. Cl.⁵ : **G01N 27/22**

(22) Anmeldetag : **21.02.91**

(30) Priorität : **07.03.90 CH 722/90**

(43) Veröffentlichungstag der Anmeldung :
**11.09.91 Patentblatt 91/37**

(84) Benannte Vertragsstaaten :
**AT CH DE FR GB IT LI**

(71) Anmelder : **GINOVA AG**
**Bielstrasse 76**
**CH-2542 Pieterlen (CH)**

(72) Erfinder : **Ineichen, Martin**
**Mattenweg 11**
**CH-3293 Dotzigen (CH)**

(74) Vertreter : **Tschudi, Lorenz**
**Bovard AG Patentanwälte VSP**
**Optingenstrasse 16**
**CH-3000 Bern 25 (CH)**

(54) **Kapazitiver Feuchterfühler.**

(57)  Auf der einen Seite eines plättchenförmigen Substrates (3), vorzugsweise aus Glas, ist eine feuchteempfindliche Metalloxidschicht (2) vorhanden. Auf der der Oxidschicht gegenüberliegenden Seite des Substrates sind Elektroden (4a, 4b) angeordnet und je mit einem Anschlussdraht (6) verbunden. Die Metalloxidschicht (2) und die metallenen Beläge der Elektroden (4a, 4b) werden in einem Wärmedruckverfahren auf das Substrat (3) aufgebracht. Der kapazitive Feuchtefühler ist ohne photolithographische Verfahrensschritte auf sehr einfache Art herstellbar, weist eine sehr schnelle Reaktionszeit auf und besitzt auf der Seite der feuchteempfindlichen Schicht (2) keine metallenen Elektrodenteile. Der Fühler eignet sich daher zum Messen von Mikroklimas. Er kann auch in explosionsgefährdeten Umgebungen mit Vorteil eingesetzt werden.

EP 0 446 167 A1

# FIG. 1

# KAPAZITIVER FEUCHTEFÜHLER

Die vorliegende Erfindung betrifft einen kapazitiven Feuchtefühler gemäss dem Oberbegriff des Patentanspruches 1 und ein Verfahren zu dessen Herstellung gemäss dem Patentanspruch 6.

Kapazitive Feuchtefühler sind in einer Vielzahl von Ausführungsformen auf dem Markt bekannt. Ein typischer Aufbau solcher Feuchtefühler ist in der deutschen Offenlegungsschrift DE-OS 33 39 276 offenbart. Nach dieser Lehre aufgebaute Fühler zeichnen sich durch einen grossen Messbereich, hohe Genauigkeit und relativ hohe Ansprechgeschwindigkeit aus. Zur Herstellung solcher Fühler, die fast ausschliesslich ein Polymer als feuchteempfindliche Schicht aufweisen, sind relativ viele einzelne Verfahrensschritte notwendig, was dazu führt, dass diese Fühler in der oberen Preisklasse anzutreffen sind. Zum Fabrizieren eines Feuchtefühlers nach der in der obgenannten Schrift angegebenen Lehre sind beispielsweise für das Strukturieren einer direkt auf einem Substratplättchen aufgebrachten Grundelektrode, einer darüberliegenden feuchteempfindlichen Schicht und einer Deckelektrode, je nach Ausführungsart, zwei bis drei photolithographische Verfahrensschritte zum Erstellen von Aetzmasken und zwei bis drei Aetzvorgänge notwendig. Dazwischen liegen eine Vielzahl weiterer Verfahrensschritte wie Oxidationen, Reinigungen, Wärmebehandlungen usw.

Die deutsche Patentschrift DE-PS 20 52 456 beschreibt einen kapazitiven Feuchtefühler, der ein Metalloxid als feuchteempfindliche Schicht verwendet. Dieser Fühler ist ohne feuchteunempfindliches Trägermaterial, das der Erhöhung sowohl der mechanischen als auch der elektrischen Stabilität dient, aufgebaut. Um einen anodisch oxidierten Aluminiumdraht ist bei dieser Ausführungsform ein wendelförmig angeordneter Kupferdraht angebracht. Der Aluminiumdraht bildet die erste Elektrode, die Aluminiumoxidschicht dient als feuchteempfindliche Schicht und der um die Aluminiumoxidschicht gewickelte, mit einer Isolationsschicht versehene Kupferdraht bildet die zweite Elektrode. Diese Art Feuchtefühler ist zwar relativ einfach im Aufbau, weist aber, wie schon erwähnt, den Nachteil einer kleinen mechanischen und elektrischen Stabilität auf. Zudem wird durch die um die feuchteempfindliche Schicht gewickelte Kupferdrahtwendel die Ansprechgeschwindigkeit des Fühlers reduziert.

Es ist die Aufgabe der vorliegenden Erfindung, einen kapazitiven Feuchtefühler zu schaffen, der mindestens gleich gute elektrische und mechanische Eigenschaften aufweist wie derjenige der eingangs beschriebenen Art, der aber in seiner Herstellung wesentlich einfacher ist.

Die Lösung dieser Aufgabe erfolgt gemäss den Merkmalen in den kennzeichnenden Teilen der Patentansprüche 1 und 6.

Der erfindungsgemässe Feuchtefühler zeichnet sich durch seinen einfachen aber robusten mechanischen Aufbau aus. Auf der einen Seite eines plättchenförmigen Substrates ist ein Metalloxid als feuchteempfindliche Schicht und auf der anderen Seite des Substratplättchens eine Elektrodenanordnung angebracht. Das Substratplättchen dient zusammen mit der feuchteempfindlichen Schicht als Dielektrikum des kapazitiven Fühlers. Weil die Elektroden nicht direkt mit der feuchteempfindlichen Schicht in Verbindung stehen, wie das sonst üblicherweise der Fall ist, sondern über das Substratplättchen, das auch als Wärmeisolator dient, von der feuchteempfindlichen Schicht getrennt sind, erfolgt auf der Oxidschichtseite praktisch keine Wärmeableitung. Der Fühler eignet sich daher ganz besonders zum Messen von Mikroklimas, wo verhindert werden soll, dass durch das Anordnen von Sensoren das Mikroklima, insbesondere dessen Temperatur, störend verändert wird. Die feuchteempfindliche Metalloxidschicht des erfindungsgemässen Fühlers nimmt schnell die Temperatur des Mikroklimas an, ohne dass eine Wärmeabführung durch metallische Elektroden und Anschlussdrähte erfolgt.

Dadurch, dass die metallischen Elektroden nicht auf der Seite der feuchteempfindlichen Schicht angeordnet sind, ist der Fühler ebenfalls zum Durchführen von Messungen in explosionsgefährdeten Umgebungen geeignet.

Durch den Wegfall jeglicher photolithographischer Verfahren erfolgt eine wesentliche Vereinfachung in der Herstellung, was sich schlussendlich positiv auf die Erstellungskosten auswirken dürfte. Ueberraschenderweise hat man festgestellt, dass der erfindungsgemässe Fühler gegenüber zum Stand der Technik zählender Fühler der eingangs beschriebenen Art eine äusserst kurze Reaktionszeit aufweist.

Der erfindungemässe Fühler sowie ein bevorzugtes Verfahren zu dessen Herstellung sind im folgenden anhand von Zeichnungen beispielsweise näher beschrieben. Es zeigen

Fig. 1 eine isometrische Darstellung des Feuchtefühlers und

Fig. 2a - 2d Schnittansichten der verschiedenen Verfahrensschritte bei der Herstellung des in der Fig. 1 dargestellten Feuchtefühlers.

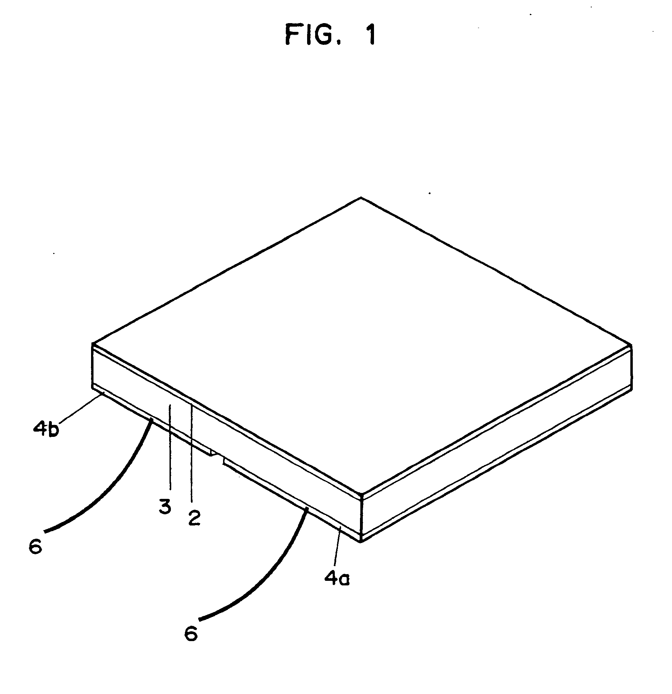

Der kapazitive Feuchtefühler gemäss der Fig. 1 weist ein plättchenförmiges Substrat 3, vorzugsweise aus Glas auf. Die eine Seite des Glasplättchens ist mit einer Metalloxidschicht 2 bedeckt. Diese kann, je nach dem gewählten Herstellverfahren, beispielsweis ein Aluminiumoxid oder ein Titanoxid sein. Als besonders vorteilhaft für das weiter hinten beschriebene bevorzugte Herstellungsverfahren hat sich Titanoxid herausgestellt. Auf der dem Metalloxid 2 gegenüberliegenden Seite des Substratplättchens 3 sind zwei Elekroden 4a, 4b angeordnet. Die beiden Elektroden sind elektrisch voneinander isoliert und weisen je einen Anschlussdraht 6 auf. Die Elektroden bestehen aus einer metallenen Schicht, die je nach dem Herstellverfahren auf das Substratplättchen aufgepresst oder aufgedampft worden ist. Als Elektrodenmaterial eignet sich ebenfalls Aluminium oder Titan.

In der Fig. 1 ist deutlich die räumliche Trennung der feuchteempfindlichen Metalloxidschicht 2 von den metallenen Elektroden 4a, 4b und den metallenen Anschlussdrähten 6 sichtbar. Das feuchteunempfindliche Substrat 3 bildet zusammen mit der feuchteempfindlichen Metalloxidschicht 2 das Dielektrikum des kapazitiven Fühlers. Das Substrat wirkt im weiteren als elektrischer Isolator und als Wärmeisolator der genannten metallenen Teile gegenüber der feuchteempfindlichen Metalloxidschicht.

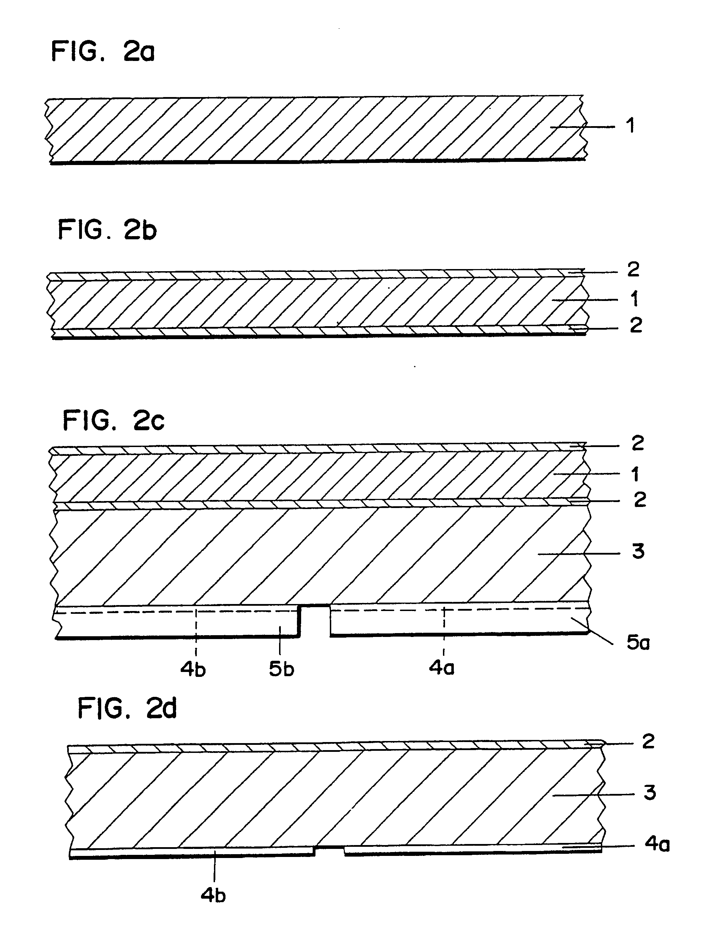

Die einzelnen Verfahrensschritte eines bevorzugten, weil sehr einfachen Verfahrens zum Herstellen des erfindungsgemässen Fühlers sind in den Fig. 2a bis 2d dargestellt. Die Oberfläche einer Metallfolie 1 (Fig. 2a) aus Titan, wird nach bekannter Art mit einer Oxidschicht 2 versehen (Fig. 2b).

Darum wird die oxidierte Titanfolie 1 auf die eine Seite eines plättchenförmigen Substrates 3, vorzugsweise aus Glas, gelegt. Auf der gegenüberliegenden Seite des Substratplättchens 3 werden weitere Metallfolien 5 angeordnet. Diese bestehen ebenfalls aus Titan, weisen aber keine Oxidschicht auf. In einem Heiz- und Pressvorgang werden sowohl die oxidierte Folie 1 wie die nicht oxidierten Folien 5 mit dem Substratplättchen 3 verbunden. Dabei wird die oxidierte Titanfolie 1 mit einer ebenen Heizplatte in Verbindung gebracht. Die letztere wird auf ca. 650 bis 750° C aufgeheizt. Ein parallel zur Heizfläche angeordneter planer Druckstempel einer Pressvorrichtung presst mit einem Druck von ca. $5 \times 10^6$ pa (ca. 50 kp pro cm²) in Richtung der Heizfläche gegen die weiteren Titanfolien 5 (Fig. 2c).

Titan hat die Eigenschaft, dass sein Oxid schlecht an ihm anhaftet. Durch Abreissen der oxidierten Titanfolie 1 nach dem Aufpressvorgang bleibt deshalb die am Substrat 3 anliegende Oxidschicht 2 mit dem letzteren verbunden. Das Abreissen der nicht oxidierten Metallfolien 5 nach dem Aufpressvorgang bewirkt, dass auf der der Oxidschicht 2 gegenüberliegenden Oberfläche des Substrates 3 dünne metallene Beläge haften bleiben. Diese Beläge sind jedoch stark genug zum Bilden der Elektroden 4a, 4b (Fig. 2d). Durch Bonden oder Entladungsschweissen wird in einem weiteren Arbeitsgang an den Elektroden je ein Anschlussdraht angebracht.

Es wäre ebenfalls denkbar, die weitere Metallfolie 5 einstückig aufzupressen und nach dem Abreissen der Folie den zurückbleibenden Metallbelag, beispielsweise mit einer Diamantscheibe, in die beiden Elektroden 4a, 4b aufzutrennen.

Der erfindungsgemässe Fühler könnte ebenfalls durch andere Verfahren hergestellt werden.

Aluminium hat die Eigenschaft, dass die Oxidschicht sehr stark an ihm anhaftet. Bei der Verwendung einer oxidierten Aluminiumfolie kann diese nach dem Aufpressen nicht so abgerissen werden, dass eine Oxidschicht am Substratplättchen haften bleibt. Hingegen wäre es möglich, die Aluminiumfolie nach dem Aufpressen grossflächig und vollständig durchzuoxidieren. Dadurch wäre auf der einen Seite des Substrates eine feuchteempfindliche Metalloxidschicht vorhanden. Auf der dieser Oxidschicht gegenüberliegenden Seite des Substrates hätten mit dem gleichen Aufpressvorgang nicht oxidierte Aluminiumfolien zum Bilden von Elektroden angepresst werden können. Ebenfalls wäre es denkbar, die letzteren durch das Aufdampfen von metallenen Schichten zu erstellen.

Das Substratplättchen für den erfindungsgemässen Fühler hat eine typische Grösse von 5 x 5 mm². Die Dicke des Plättchens beträgt ca. 0,1 - 0,5 mm. Die Dicke der feuchteempfindlichen Metalloxidschicht liegt im Bereich von etwa einem bis einigen wenigen Mikrometern. Zur rationellen Herstellung ist es denkbar, ein entsprechend grösserflächiges Substratplättchen mit den entsprechenden Schichten in einem der vorgängig beschriebenen Verfahren zu versehen und das Plättchen nachträglich in einzelne Fühlerelemente aufzutrennen.

Je nach der Oxidschicht, der Dicke des Substrates und/oder der Anordnung der Elektroden können einzelne Fühlerparameter, beispielsweise die Empfindlichkeit, eingestellt werden. Erfindungsgemässe Feuchtefühler, die je nach Anwendungsfall unterschiedliche Optimierungen aufweisen müssen, sind so ebenfalls einfach herstellbar.

**Patentansprüche**

1.  Kapazitiver Feuchtefühler mit einem feuchteunempfindlichen, plättchenförmigen isolierenden Substrat (3), wenigstens zwei Elektroden (4a, 4b) und einer feuchteempfindlichen Metalloxidschicht (2), dadurch gekennzeichnet, dass die Metalloxidschicht (2) auf der einen Seite des Substratplättchens (3) angeordnet und mit diesem verbunden ist, dass die Fläche des Substratplättchens (3) mindestens teilweise von der Metalloxidschicht (2) bedeckt ist und dass die Elektroden (4a, 4b) auf der der Metalloxidschicht abgewandten Seite des Substratplättchens angeordnet sind.

2.  Kapazitiver Feuchtefühler nach Anspruch 1, dadurch gekennzeichnet, dass das Substratplättchen (3) aus einem elektrisch- und wärmeisolierenden Material, vorzugsweise aus Glas, hergestellt ist.

3. Kapazitiver Feuchtefühler nach Anspruch 1 oder 2, dadurch gekennzeichnet, dass die Metalloxidschicht (2) vorzugsweise eine Schicht aus Titanoxid ist.

4. Kapazitiver Feuchtefühler nach einem der Ansprüche 1 bis 3, dadurch gekennzeichnet, dass die Elektroden (4a, 4b) mindestens zwei voneinander getrennte Metallchichten, vorzugsweise aus Titan oder Aluminium umfassen.

5. Kapazitiver Feuchtefühler nach einem der Ansprüche 1 bis 4, dadurch gekennzeichnet, dass jede der Elektroden (4a, 4b) mit mindestens einem elektrischen Anschlussdraht (6) verbunden ist.

6. Verfahren zur Herstellung eines kapazitiven Feuchtefühlers nach einem der Ansprüche 1 bis 5, dadurch gekennzeichnet, dass auf einer anodisch oxidierbaren Metallfolie (1) eine dünne, als Haftschicht dienende Metalloxidschicht (2) gebildet wird, dass die leicht oxidierte Metallfolie (1) bei einer Temperatur von 650 bis 750° C und unter einem Druck bis $5 \times 10^6$ pa auf das Substrat (3) zum Herstellen einer guten Verbindung mit der Oxidschicht (2) aufgepresst wird und dass die Metallfolie (1) nach dem Aufpressvorgang abgerissen wird, wobei die zwischen der Metallfolie (1) und dem Substrat (3) liegende Oxidschicht (2) am Substrat (3) haften bleibt.

7. Verfahren nach Anspruch 6, dadurch gekennzeichnet, dass beim Aufpressvorgang auf der der Metallfolie (1) abgewandten Seite des Substrates zwei weitere, voneinander elektrisch isolierte Metallfolien (5a, 5b) mitangepresst und nach dem Anpressvorgang ebenfalls abgerissen werden, wobei auf der Substratoberfläche je eine durch jede der weiteren Metallfolien (5a, 5b) gebildete leitende Schicht (4a, 4b) haften bleibt und dass jede dieser leitenden Schichten als Elektrode (4a, 4b) benutzt wird.

8. Verfahren nach Anspruch 6, dadurch gekennzeichnet, dass die metallischen Elektroden (4a, 4b) aufgedampft werden.

9. Verfahren nach einem der Ansprüche 6 bis 8, dadurch gekennzeichnet, dass auf dem Substrat (3) ein oder mehrere Feuchtefühler gleichzeitig hergestellt werden.

10. Verfahren nach einem der Ansprüche 6 bis 9, dadurch gekennzeichnet, dass die elektrischen Anschlüsse (6) durch Bonden oder Entladungsschweissen mit den Elektroden (4a, 4b) verbunden werden.

FIG. 1

4b

3 2

6

6

4a

## FIG. 2a

1

## FIG. 2b

2
1
2

## FIG. 2c

2
1
2
3
5a
4b    5b    4a

## FIG. 2d

2
3
4a
4b

**Europäisches Patentamt**

# EUROPÄISCHER RECHERCHENBERICHT

Nummer der Anmeldung

EP 91 81 0114

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 826 979 (H. STEINMANN) <br> * Titel Seite * <br> --- | 1 | G 01 N 27/22 |
| A | GB-A-2 020 434 (K. FUJITO) <br> * Seite 2, Zeile 112 * <br> --- | 1 | |
| A | US-A-4 429 343 (P.J. FREUD) <br> * Titel Seite * <br> ----- | 1 | |
| | | | **RECHERCHIERTE SACHGEBIETE (Int. Cl.5)** |
| | | | G 01 N |

Der vorliegende Recherchenbericht wurde für alle Patentansprüche erstellt

| Recherchenort | Abschlußdatum der Recherche | Prüfer |
|---|---|---|
| DEN HAAG | 03-06-1991 | DUCHATELLIER M.A. |

EPO FORM 1503 03.82 (P0403)